# FASCICULE DE BREVET EUROPEEN

(11) **EP 0 675 020 B1**
(45) Date de publication et mention de la délivrance du brevet: **09.09.1998**
(21) Numéro de dépôt: 95440012.3
(22) Date de dépôt: 31.03.1995
(51) Int. Cl.: B60P 3/08, B61D 3/18

(54) **Unité de transport mixte autoportable et transformable pour le transport combiné rail/route de fret et de véhicules**
Einheit für kombinierten Transport, selbstragend und verwandelbar für den kombinierten Schiene/Strasse-Transport von Fracht und Fahrzeugen
Unit for mixed transport, self-portable and transformable for the combined rail and road transport of freight or vehicles

(30) Priorité: 31.03.1994 FR 9404092
(43) Date de publication de la demande: 04.10.1995
(73) Titulaire: LOHR INDUSTRIE, 67980 Hangenbieten (FR)
(72) Inventeur: André, Jean-Luc, F-67210 Obernai (FR); Morel, Hervé, F-67540 Ostwald (FR)
(74) Mandataire: Metz, Paul

(56) Documents cités:
- EP-A- 0 518 795
- EP-A- 0 540 320
- DE-A- 2 010 239

## Description

La présente invention se rapporte à une unité de transport du type conteneur, caisse mobile ou semi-remorque pour le transport rail/route et le transport mixte alternatif de fret ou de véhicules.

L'encombrement des axes routiers et autoroutiers oblige les administrations chargées des réseaux routiers et des transports à envisager de soutenir et de développer une solution mixte rail/route pour les transports terrestres autres que celui des personnes.

Par ailleurs, un pays comme la Suisse a déjà voté une loi à application différée selon laquelle le chargement de tous les véhicules utilitaires traversant ce pays devra obligatoirement être transporté par des moyens ferroviaires.

Dès lors, des solutions techniques adaptées sont à trouver pour la réalisation du transbordement rapide entre les véhicules routiers et les wagons et inversement.

Les résultats de diverses études ont déjà débouché sur des réalisations opérationnelles.

On distingue deux catégories de moyens généraux.

Les premiers moyens consistent à charger l'unité roulante porteuse du chargement, remorque, semi-remorque ou autre, désaccouplée du véhicule à moteur.

Les seconds moyens procèdent par transbordement, dépose ou enlèvement sur voie ferrée d'unités de transport fixées pendant le transport aux structures de châssis des véhicules routiers. On peut mentionner dans cette catégorie les conteneurs ou semi-remorques ou caisses mobiles pourvus en sous-face de moyens de fixation normalisés avec les structures des châssis porteurs.

La présente invention a pour but de permettre le transport rail/route dans les meilleures conditions de rentabilité, c'est-à-dire d'adapter les chargements aux gabarits des divers réseaux routiers et ferroviaires.

L'invention décrite dans EP 0 518 795 au nom de la Société LOHR INDUSTRIE représente l'état de la technique le plus proche et se rapporte à un conteneur multiusage comportant un plateau porteur intermédiaire mobile verticalement sur pratiquement toute la hauteur intérieure du conteneur.

Ce conteneur présente de plus un toit relevable par des moyens de translation verticale destiné à augmenter vers le haut le volume intérieur utile du conteneur.

Le conteneur présente l'originalité de posséder un espace intérieur utile de volume variable, modifiable en agrandissement par rapport au volume utile intérieur du conteneur.

La structure de toit du conteneur est mobile verticalement, mais n'est pas prévue pour supporter une charge. D'autre part, elle est disposée à l'extrémité supérieure du conteneur, c'est-à-dire à une hauteur trop élevée pour supporter une charge qui rendrait le conteneur hors gabarit.

Cette disposition est pénalisante pour l'occupation du volume utile dans le cas de charges indivisibles dont la hauteur ne permet pas un fonctionnement optimal du volume utile.

La présente invention a pour but de remédier à cet inconvénient en prévoyant un plateau mobile pouvant jouer indifféremment le rôle de structure porteuse ou de structure de toit.

On dispose ainsi d'une surface mobile et effaçable en prenant la position de structure de toit dans laquelle elle libère tout le volume intérieur.

Le conteneur, selon l'invention, permet aussi d'accueillir des charges de grand volume mais aussi par ailleurs de disposer de deux plans de chargement non pénalisés par l'épaisseur du toit.

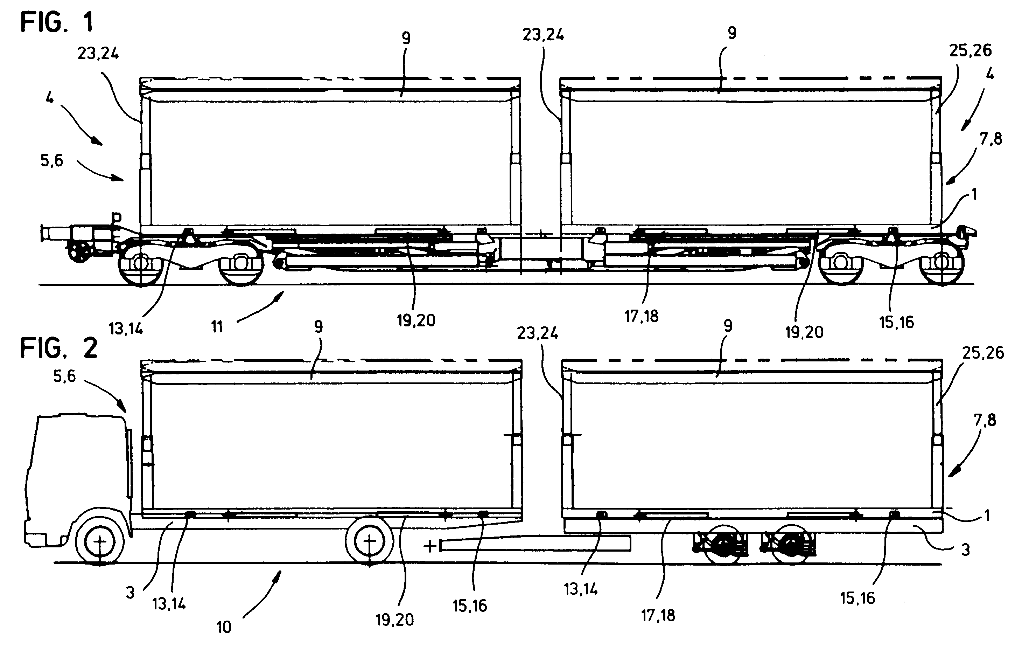

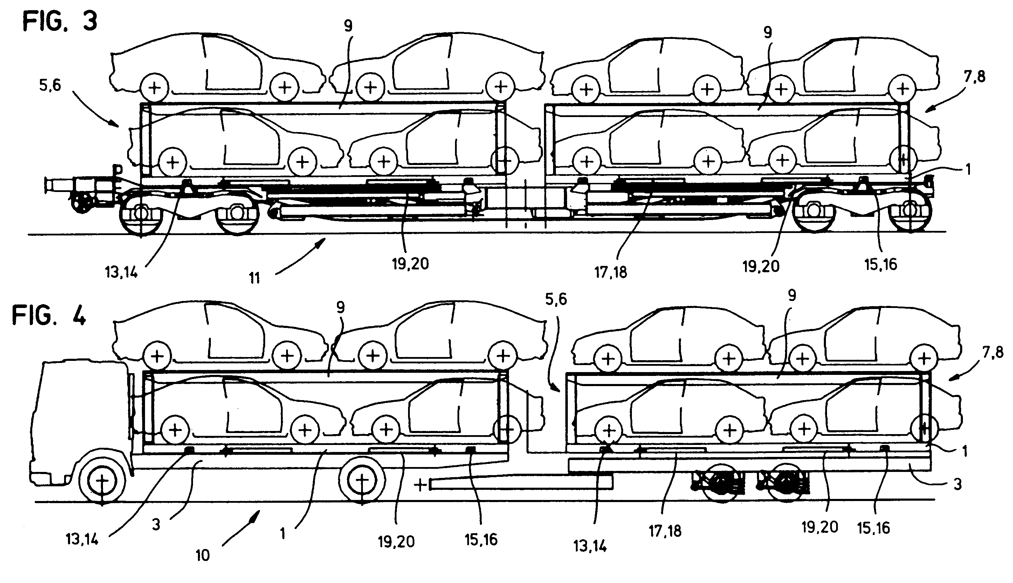

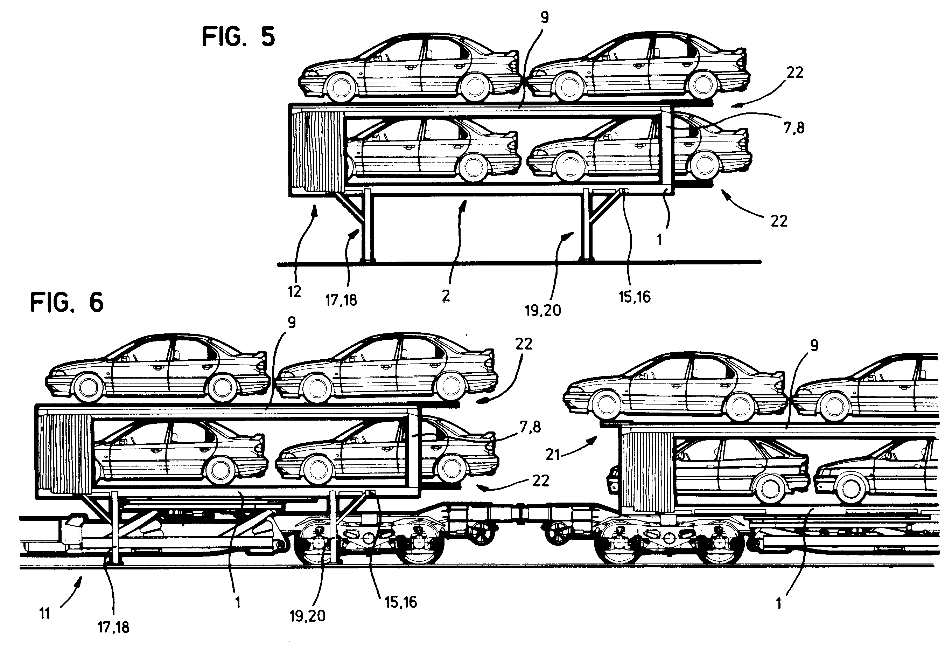

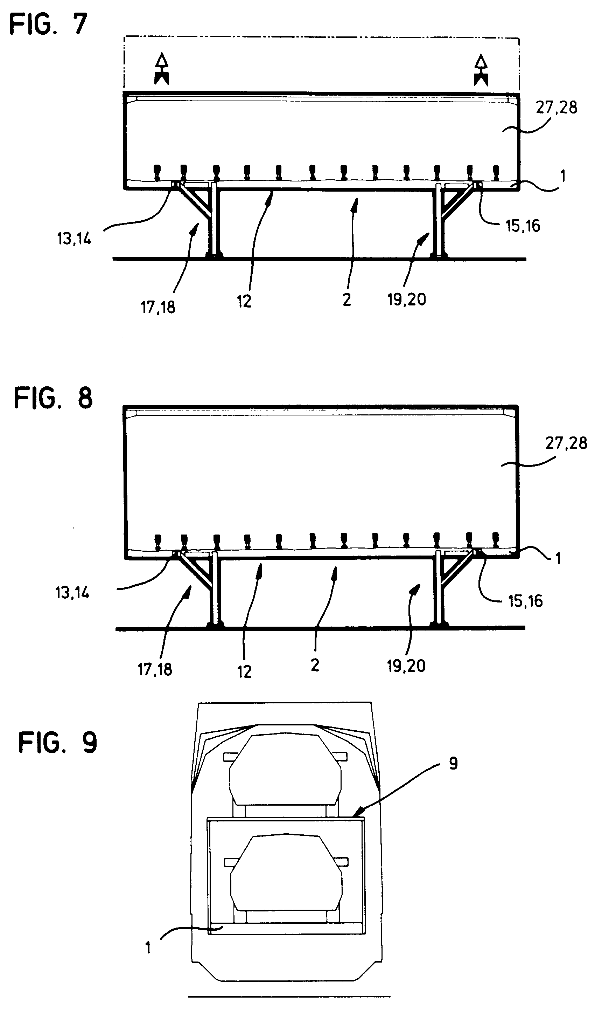

Les caractéristiques techniques et d'autres avantages de l'invention sont consignés dans la description qui suit, effectuée à titre d'exemple non limitatif sur un mode d'exécution en référence aux dessins accompagnants dans lesquels :
. les figures 1 à 4 sont des vues de deux exemples de réalisation de transport en mode routier et en mode ferroviaire mettant en oeuvre l'unité de transport selon l'invention,
. les figures 5 à 8 sont des vues schématiques montrant des exemples d'applications à l'état porté par béquilles et chargé sur un wagon,
. la figure 9 est une vue schématique en coupe illustrant de façon simple les variations possibles correspondant aux différents gabarits.

L'unité mixte de transport fret/véhicule selon l'invention, qui peut être indifféremment une semi-remorque, un conteneur ou une caisse mobile, se compose d'une base-châssis 1 présentant une interface inférieure de fixation 2 sur un châssis porteur 3 d'un moyen de transport, une ossature 4 formée de quatre poteaux d'angle avant 5, 6 et arrière 7, 8 portée par la base-châssis 1 et un plateau mobile 9 entre une position basse à niveau variable dans laquelle il joue le rôle de plan porteur et des positions extrêmes hautes dans lesquelles il joue le rôle de toit.

Dans le cas d'une semi-remorque, la base-châssis 1 est le châssis de la semi-remorque ou éventuellement un châssis rapporté. On peut envisager également un conteneur faisant partie de la semi-remorque à titre de carrosserie porteuse.

Selon les caractéristiques de la variante représentée, l'interface avec un véhicule routier 10 ou ferroviaire 11 est une base-châssis 1 en cadre porteur 12 présentant quatre blocs de fixation 13, 14 et 15, 16 éventuellement disposés aux quatre angles, par exemple du type blocs normalisés ISO coopérant chacun avec un verrou tournant ou des chevilles brochables ou non. Ces verrous tournants sont prévus classiquement sur les châssis porteurs pour la fixation des conteneur ou semi-remorques normalisés. Sur les chants longitudinaux de ce cadre porteur 12 sont montées des béquilles escamotables avant 17, 18 et arrière 19, 20 destinées à soutenir l'ensemble à une hauteur appropriée en vue de son chargement sur un châssis ou une plate-forme porteuse d'un véhicule routier 10 ou ferroviaire 11.

La face supérieure de la base-châssis 1 est prévue pour servir alternativement de plancher de chargement de marchandises, à savoir une surface plane sans structure(s) saillante(s), ou de plan de chargement spécialement équipé pour le transport de véhicules. Dans ce deuxième type d'usage, divers éléments ou structures font partie de l'équipement, par exemple des perforations pour l'ancrage des cales, des anneaux d'amarrage, des supports de cales, des structures porteuses inclinables, des rallonges temporaires avant et arrière 21 et 22, des rampes de chargement du plateau supérieur (pour la plupart non représentées) selon les besoins et autres moyens spécifiquement prévus pour le transport de véhicules.

Sur les poteaux d'angle prend appui un deuxième plan de chargement sous la forme d'un plateau mobile 9 en hauteur entre une position inférieure variable et une position supérieure également variable selon les gabarits routiers ou ferroviaires autorisés sur les lignes de transport.

Ce plateau mobile 9 est appelé à servir alternativement à deux usages. Le premier usage concerne le transport de véhicules dont il a été question ci-dessus alors que le deuxième usage est celui d'une fermeture et d'une protection supérieure à la manière d'un toit.

Les différents gabarits sont illustrés par les courbes-enveloppes de la figure 9.

En ce qui concerne le système de manoeuvre en élévation et en descente, divers types de moyens conviennent.

On vise ici la fonction générale de déplacement vertical, de mise en position du plateau à une hauteur prédéterminée et de blocage dans cette position d'utilisation et ceci de façon manuelle ou motorisée.

Il peut s'agir tout d'abord de poteaux télescopiques d'angle tels que représentés et référencés 23, 24 et 25, 26 s'engageant dans ou autour de la base des poteaux d'angle équipés d'un moyen mécanique intérieur ou extérieur de translation, par exemple motorisé.

Il peut s'agir aussi de poteaux du type à vis à l'intérieur et le long de chacun desquels se déplace un écrou de translation. La vis est entraînée en rotation par un moteur électrique ou hydraulique.

On peut imaginer d'autres systèmes de levage, par exemple à poulies et à chaînes, à vérins, à composants mécaniques articulés...

On peut aussi envisager des dispositifs manuels de déplacement et de mise en place à une hauteur déterminée du plateau à vide sous l'effet supplémentaire de compensateurs ou plus généralement sous l'effet d'une force d'assistance au mouvement. Ces dispositifs de positionnement du plateau à vide sont par exemple du type mettant en oeuvre des guides et des positions d'arrêt verrouillables.

Par ailleurs, on peut employer une force extérieure provenant de moyens extérieurs, par exemple la fourche d'un chariot élévateur.

La surface latérale est fermée sur les faces longitudinales 27, 28, soit carrossées, soit bâchées, alors que les faces transversales d'extrémité ne comportent que des moyens de fermeture amovibles effaçables ou optionnels ou également une fermeture par bâche.

Les extrémités transversales de l'unité de transport sont ouvertes ou fermées, mais de préférence fermées en mode de transport de marchandises, alors qu'en mode de transport de véhicules, ces mêmes extrémités seront de préférence ouvertes, laissant dépasser l'avant ou l'arrière des véhicules de plus grande longueur.

Comme déjà indiqué, les moyens de soutien peuvent prendre par exemple la forme de béquilles escamotables de longueur constante ou non, passives ou actives, prévues par exemple sur chacun des chants longitudinaux de la base-châssis 1 ou autres variantes telles que des béquilles télescopiques d'extrémité ou des béquilles intégrées dans les montants d'angle.

Par ailleurs, au moins un des poteaux d'angle présentera de façon avantageuse au moins une lumière devant laquelle se déplace l'élément mobile intérieur du poteau télescopique ou inversement, dans le cas d'un élément mobile extérieur entourant le poteau.

L'élément intérieur mobile ou fixe porte à différents niveaux une série de signes distinctifs d'identification de *hauteur de classement*, *c'est-à-dire une identification selon une codification permettant de classer le conteneur par rapport à son aptitude à passer sous les ponts*. *Cette identification se réalisera* sous la forme par exemple d'étiquettes, de plaquettes ou de simples marques indélébiles, dessinées ou imprimées, correspondant à la hauteur de classement de l'unité de transport selon l'invention.

Cette particularité de visualisation *de la hauteur de classement* peut prendre différentes autres formes de réalisation, par exemple un index solidaire du plateau mobile ou d'un élément qui lui est solidaire, se déplaçant devant des repères ou des signes ponctuels représentatifs du classement.

## Revendications

1. Unité de transport mixte transformable pour le transport combiné rail/route de fret et de véhicules présentant un plancher et une ossature (4) formée de quatre poteaux d'angle (5,6) et (7,8) et montée sur une base-châssis (1) dont la partie inférieure forme une interface de fixation (2) avec un châssis porteur (3) d'un moyen de transport routier ou ferroviaire et des moyens de support au sol, l'ossature (4) comportant un plateau mobile (9) entre une position basse de niveau réglable dans laquelle il porte des véhicules (10) ou (11) et une position haute également de niveau réglable caractérisée en ce que dans la position haute, à l'état chargé ou non, le plateau mobile (9) assure la fonction de toit, et en ce que sa position le long des poteaux d'angle est indiquée par repérage.

2. Unité de transport selon la revendication 1, caractérisée en ce que les faces transversales d'extrémité sont pourvues de moyens de fermeture.

3. Unité de transport selon la revendication 1, caractérisée en ce que le plateau mobile (9) est porté par les poteaux d'angle (5, 6) et (7, 8) à travers des moyens de déplacement.

4. Unité de transport selon la revendication 3, caractérisée en ce que les moyens de déplacement sont des poteaux télescopiques (23, 24) et (25, 26) mobiles dans ou autour des poteaux d'angle et associés à des moyens moteurs.

5. Unité de transport selon la revendication 4, caractérisée en ce que les moyens moteurs sont externes aux poteaux d'angle (5, 6) et (7, 8).

6. Unité de transport selon la revendication 4, caractérisée en ce que les moyens de déplacement sont des ensembles vis-écrous prévus dans les poteaux d'angles (5, 6) et (7, 8).

7. Unité de transport selon la revendication 1, caractérisée en ce que les planchers de chargement de la base-châssis (1) et celui du plateau mobile (9) sont équipés de structures et de moyens adaptés au transport de véhicules.

8. Unité de transport selon la revendication 1, caractérisée en ce que les moyens de support au sol sont des béquilles escamotables (17, 18) et (19, 20) prévues sur chaque flanc longitudinal de la base-châssis (1).

9. Unité de transport selon la revendication 8, caractérisée en ce que les béquilles escamotables sont intégrées dans les poteaux d'angle (5, 6) et (7, 8).

10. Unité de transport selon la revendication 1 caractérisée en ce que la position du plateau mobile (9) est indiquée et repérable par le corps du plateau ou un élément solidaire de ce corps qui se déplace lors de son mouvement devant ou découvre ou désigne des indications correspondant à un code de classification propre aux caractéristiques dimensionnelles de l'unité de transport significatif de l'état dans lequel elle se trouve en raison de la position de son plateau mobile dans l'application visée.

## Claims

1. Convertible mixed-transport unit for the combined rail/road transport of freight and vehicles, the said unit having a floor and a framework (4) formed from four corner posts (5, 6) and (7, 8) and mounted on a chassis-type base (1) the lower part of which forms an interface (2) for attachment to a carrying chassis (3) of a road or rail transport means, and means of support on the ground, the framework (4) comprising a platform (9) which is movable between a low position of adjustable level in which it carries vehicles (10) or (11) and a high position which is also of adjustable level, characterised in that, in the high position, the movable platform (9) performs, in the loaded or non-loaded state, the function of a roof, and in that its position along the corner posts is indicated by reference marking.

2. Transport unit according to claim 1, characterised in that the transverse end faces are provided with closure means.

3. Transport unit according to claim 1, characterised in that the movable platform (9) is carried by the corner posts (5, 6) and (7, 8) via displacement means.

4. Transport unit according to claim 3, characterised in that the displacement means are telescopic posts (23, 24) and (25, 26) which are movable in or around the corner posts and are associated with driving means.

5. Transport unit according to claim 4, characterised in that the driving means are external to the corner posts (5, 6) and (7, 8).

6. Transport unit according to claim 4, characterised in that the displacement means are screw-and-nut systems provided in the corner posts (5, 6) and (7, 8).

7. Transport unit according to claim 1, characterised in that the load floors of the chassis-type base (1) and that of the movable platform (9) are equipped with structures and means adapted to the transport of vehicles.

8. Transport unit according to claim 1, characterised in that the means of support on the ground are retractable legs (17, 18) and (19, 20) provided on each longitudinal side of the chassis-type base (1).

9. Transport unit according to claim 8, characterised in that the retractable legs are integrated into the corner posts (5, 6) and (7, 8).

10. Transport unit according to claim 1, characterised in that the position of the movable platform (9) is indicated and can be marked for reference purposes by the body of the platform or an element integral with the said body which is displaced during its movement in front of, or uncovers or designates indications corresponding to, a classification code peculiar to the dimensional characteristics of the transport unit and signifying the state in which the latter is situated by reason of the position of its movable platform in the application aimed at.

## Patentansprüche

1. Verwandelbare Transporteinheit für den kombinierten Schienen- und Straßentransport von Frachten und Fahrzeugen mit einem Boden und einem von vier Eckstützen (5, 6) und (7, 8) gebildeten Tragwerk (4), welches auf einem Grundrahmen (1) angeordnet ist, dessen Unterseite eine Fläche (2) zum Festlegen an einem Tragrahmen (3) eines Transportmittels für Schiene oder Straße bildet, das Bodenstützen und eine Plattform (9) aufweist, die zwischen einer niederen Position mit regelbarem Niveau zur Aufnahme von Fahrzeugen (10 oder 11) und einer angehobenen Position mit regelbarem Niveau beweglich ist, dadurch gekennzeichnet, daß die bewegliche Plattform (9) in ihrer angehobenen Position im beladenen oder im unbeladenen Zustand die Funktion eines Dachs übernimmt und ihre Position entlang der Eckstützen von einer Markierung angezeigt ist.

2. Transporteinheit nach Anspruch 1, dadurch gekennzeichnet, daß die äußeren Längsseiten mit Mitteln zum Verschließen ausgestattet sind.

3. Transporteinheit nach Anspruch 1, dadurch gekennzeichnet, daß die äußeren Querwände mit Mitteln Eckstützen (5, 6, 7, 8) durch Mittel zum Verstellen getragen ist.

4. Transporteinheit nach Anspruch 3, dadurch gekennzeichnet, daß die Mittel zum Verstellen Teleskopstützen (23, 24, 25, 26) sind, die in den Eckstützen oder um die Eckstützen herum beweglich und mit Antriebsmitteln verbunden sind.

5. Transporteinheit nach Anspruch 4, dadurch gekennzeichnet, daß die Antriebsmittel außerhalb der Eckstützen (5, 6, 7, 8) angeordnet sind.

6. Transporteinheit nach Anspruch 4, dadurch gekennzeichnet, daß die Mittel zum Verstellen Spindel-Muttern-Systeme sind, welche in den Eckstützen (5, 6, 7, 8) vorgesehen sind.

7. Transporteinheit nach Anspruch 1, dadurch gekennzeichnet, daß die Ladeböden des Grundrahmens (1) und diejenigen der verstellbaren Plattform (9) für den Transport von Fahrzeugen geeignete Strukturen und Mittel aufweisen.

8. Transporteinheit nach Anspruch 1, dadurch gekennzeichnet, daß die Bodenstützen an jeder Längsseite des Grundrahmens (1) angeordnete, ausklappbare Stützfüße (17, 18, 19, 20) sind.

9. Transporteinheit nach Anspruch 8, dadurch gekennzeichnet, daß die klappbaren Stützfüße in die Eckstützen (5, 6, 7, 8) eingesetzt sind.

10. Transporteinheit nach Anspruch 1, dadurch gekennzeichnet, daß die ausklappbaren Stützfüße in die form (9) angezeigt oder markiert wird von dem Plattformkörper oder einem mit diesem verbundenen Element, das sich bei seiner Bewegung vor Anzeigen bewegt oder diese abdeckt oder bestimmt, die einem Klassifizierungscode entsprechen, der für die Dimensionscharakteristika der Transporteinheit, die kennzeichnend sind für den Zustand, in dem sie sich aufgrund der Position ihrer beweglichen Plattform bei der beabsichtigten Verwendung befindet, geeignet ist.
